# EUROPÄISCHE PATENTANMELDUNG

(11) **EP 4 563 521 A1**
(43) Veröffentlichungstag der Anmeldung: **04.06.2025**
(21) Anmeldenummer: 24206982.1
(22) Anmeldetag: 16.10.2024
(51) Int. Cl.: B67C 3/00, B67C 7/00, G05B 19/418

(54) **VERFAHREN ZUR KONTROLLE EINES PRODUKTIONSABLAUFS IN EINER PRODUKTIONSLINIE UND PRODUKTIONSLINIE, INSBESONDERE ABFÜLLLINIE**

(30) Priorität: 28.11.2023 DE 102023133224
(71) Anmelder: Krones AG, 93073 Neutraubling (DE)
(72) Erfinder: LINDNER, Peter, 93073 Neutraubling (DE); STEINER, Andreas, 93073 Neutraubling (DE); SZWARC, Robert, 93073 Neutraubling (DE); BOETTCHER, Robert, 93073 Neutraubling (DE)
(74) Vertreter: Grünecker Patent- und Rechtsanwälte PartG mbB

(57) **Zusammenfassung**

Beschrieben wird ein Verfahren zur Kontrolle eines Produktionsablaufs mit wenigstens zwei seriell geschalteten Produktionsprozessen zur Herstellung und/oder Verarbeitung von Behältern in einer Produktionslinie, die eine Abfüllung flüssiger Produkte umfasst, dieser vorgeschaltet oder dieser nachgeschaltet ist, sowie eine entsprechende Produktionslinie. Demnach werden den Behältern Datensätze über den Produktionsablauf hinweg individuell zugeordnet. Die Datensätze werden beim Durchlaufen der Produktionsprozesse mit prozess- und/oder behälterspezifischen Produktionsdaten angereichert. Dadurch lässt sich die Produktionslinie unter Rückverfolgung einzelner Prozessschritte und Prozessergebnisse umfassend optimieren.

## Beschreibung

Die Erfindung betrifft ein Verfahren zur Kontrolle eines Produktionsablaufs mit seriell geschalteten Produktionsprozessen zur Herstellung und/oder Verarbeitung von Behältern in einer Produktionslinie und eine entsprechende Produktionslinie, insbesondere Abfülllinie.

Es ist bekannt, in Abfüllanlagen für einzelne Prozesseinheiten Produktionsdaten, wie beispielsweise Inspektionsdaten, mit Angaben zu den jeweils verarbeitenden Behandlungsstationen zu verknüpfen, z.B. bei Kunststoffflaschen die Auswertung von Wanddickendaten, denen sowohl Blasformkavitäten, Klammernummern, als auch Heizdornnummern zugeordnet werden. Anhäufungen von Fehlern, die bestimmten Kavitäten, Klammern oder Heizdornen zugeordnet werden können, werden entsprechend angezeigt, was die Fehlersuche erleichtert.

Bekannt ist zudem das Nachverfolgen von Behältern in Behälterbehandlungsmaschinen mittels Schieberegister. Dabei wird eine dem Behälter zugeordnete Information mittels Grobtakt und/oder Hochtakt durch die Maschine getaktet.

Aus EP 2 132 129 B1 ist ferner bekannt, die Belegung von Massentransporteuren und/oder Pufferstrecken für Behälter in einer Abfüllanlage durch eine oder mehrere Kameras abzufragen.

Nachteilig ist, dass so jeweils nur Fehleranalysen für einzelne Maschinen möglich sind und die Produktion oftmals nur unzureichend und/oder in vielen Einzelschritten optimiert werden kann.

Es besteht daher demgegenüber Verbesserungsbedarf.

Die gestellte Aufgabe wird mit den Gegenständen der unabhängigen Ansprüche gelöst. Bevorzugte Ausführungsformen sind u.a. in den Unteransprüchen angegeben. Es versteht sich, dass die Produktionslinie zur Ausführung beschriebener Verfahrensschritte ausgebildet sein kann, und dass mit beschriebenen Funktionen der Produktionslinie dementsprechende Verfahrensschritte ausgeführt werden können.

Demnach dient das beanspruchte Verfahren zur Kontrolle eines Produktionsablaufs mit wenigstens zwei seriell geschalteten Produktionsprozessen zur Herstellung und/oder Verarbeitung von Behältern, insbesondere Flaschen, in einer Produktionslinie, die eine Abfüllung flüssiger Produkte umfasst, dieser vorgeschaltet oder dieser nachgeschaltet ist. Hierfür ordnet man den Behältern Datensätze über den Produktionsablauf hinweg, also wenigstens von dessen Anfang bis zu dessen Ende, individuell zu und reichert diese beim Durchlaufen der Produktionsprozesse mit prozess- und/oder behälterspezifischen Produktionsdaten an.

Die beanspruchte Produktionslinie umfasst entsprechend einen Füller zur Abfüllung flüssiger Produkte in Behälter, insbesondere Flaschen, oder ist einem Füller vor- oder nachgeschaltet. Die Produktionslinie umfasst wenigstens zwei durch wenigstens ein Transportmittel seriell miteinander verbundene Prozesseinheiten zur Herstellung und/oder Verarbeitung der Behälter und einen Überwachungssystem, das dazu eingerichtet ist, den Behältern Datensätze über einen in den Prozesseinheiten ausgeführten Produktionsablauf individuell zuzuordnen und beim Durchlaufen der Produktionsprozesse mit prozess- und/oder behälterspezifischen Produktionsdaten anzureichern, insbesondere gemäß dem Verfahren nach wenigstens einer der beschriebenen Ausführungsformen.

Somit können auch maschinenübergreifende Zusammenhänge, die Einfluss auf die jeweilige Linieneffizienz haben, besser erkannt und systematisch analysiert werden, um auf dieser Grundlage gegebenenfalls entsprechende Optimierungsansätze zu erstellen.

Die Datensätze können den Behältern im Bereich wenigstens eines Transportabschnitts mit Zwangsführung der Behälter in Schieberegistern individuell zugeordnet und dabei insbesondere mit Produktionsdaten des jeweils so durchlaufenen Produktionsprozesses angereichert werden.

Die Datensätze können den Behältern im Bereich von Transportabschnitten ohne Zwangsführung der Behälter, insbesondere zum ungeordneten Massentransport der Behälter bzw. ohne First-In-First-Out, mittels bildgebender Transportnachverfolgung der Behälter individuell zugeordnet und insbesondere mit den Produktionsdaten des jeweils so durchlaufenen Produktionsprozesses angereichert werden.

Ebenso können die Datensätze den Behältern im Bereich von Transportabschnitten ohne Zwangsführung der Behälter, insbesondere bei einbahnigem Lufttransport der Behälter bzw. mit First-In-First-Out, mittels Laufzeitüberwachung bei jeweils unmittelbar stromaufwärts davon konstantem Produktionsausstoß individuell zugeordnet und insbesondere mit den Produktionsdaten des jeweils so durchlaufenen Produktionsprozesses angereichert werden.

Die Transportabschnitte können jeweils Bestandteile der Prozesseinheiten sein oder diese verbinden.

Die Datensätze können auch als virtuelle Datenrucksäcke der einzelnen Behälter bzw. diese auf elektronischem Wege begleitende Informationscontainer angesehen werden.

Produktionsprozesse zur Herstellung der Behälter sind beispielsweise das Erwärmen von Preforms und das Blasen von Kunststoffflaschen. Unter einer Verarbeitung sind hier alle weiteren Produktionsprozesse des Produktionsablaufs zu verstehen, beispielsweise ein Etikettieren, eine Abfüllung flüssiger Produkte in die Behälter, ein Verpacken der abgefüllten Behälter, jeweils mit gegebenenfalls zugeordneten Inspektionen beispielsweise am Eingang und/oder Ausgang einzelner Produktionsprozesse bzw. der dafür ausgebildeten Prozesseinheiten.

Der Produktionsablauf kann auch als Produktionszyklus verstanden werden, wobei dessen Anfang und Ende prinzipiell beliebig festgelegt sein können, sodass ein solcher Zyklus weder Rohstoffe noch Endprodukte betreffen muss.

Die Datensätze dienen somit der Identifizierung bzw. Markierung der einzelnen Behälter und bleiben diesen über den gesamten zu überwachenden Produktionsablauf bzw. -zyklus zugeordnet. Zu diesem Zweck kann der jeweilige Datensatz wenigstens eine infolge einer Maschinenkonfiguration der Produktionslinie bekannte Nummer der jeweiligen Prozesseinheit und einen zugehörigen Zeitstempel umfassen. Beispielsweise wird dann angegeben, welche Behandlungseinheit (ein Heizdorn, eine Klammer, eine Blasform, ein Füllventil, eine Verschließereinheit oder dergleichen) den Behälter zu welcher Zeit aufgenommen hat.

Der behälterspezifische Datensatz kann diejenigen Daten umfassen, die an einzelnen Schieberegisterpositionen der verarbeitenden Prozesseinheiten oder verwendeten Transportmittel verfügbar sind.

Der Datensatz kann beispielsweise umfassen: Informationen zu einer Preform-Charge von einem bestimmten Kippzeitpunkt bis zum jeweils nächsten Kippzeitpunkt bei Eintritt ins Schieberegister; eine individuelle Preform-Einlauftemperatur; ein Infrarot-Absorptionswert an der Schiebregisterposition einer zugehörigen Messstelle; eine individuelle Preform-Temperatur nach dem Beheizen an der jeweiligen Schieberegisterposition; Charakteristische Werte aus einer Blaskurvenanalyse über ein Schieberegister betreffend die Behälter am Blasradauslauf und die jeweils zugeordnete Blaskavität.

Mit dem Zeitstempel und beispielsweise der letzten Schieberegisterposition der beschriebenen Datenanreicherung kann der vollständige Werdegang einzelner Behälter über den Produktionsablauf bzw. -zyklus rekonstruiert werden, ggf. auch nur ein jeweils zu untersuchender Teil davon. Beispielsweise können Prozessdaten wie Heiz- und Blasparameter von im Füller geplatzten Behältern nachvollzogen werden, ebenso individuell zugehörige Preform-Einlauftemperaturen. Diese Daten können auch zu einem früheren Zeitpunkt geschrieben worden sein.

Die Datensätze können via Schieberegisterinformation von Prozessregelungssystemen einzelner Prozesseinheiten, wie beispielsweise der Blasmaschine ausgelesen und verwendet werden, um Prozessparameter zu optimieren, beispielsweise passend zu bestimmten Preform-Einlauftemperatuten.

Die jeweilige Behälteridentifikation kann mittels Schieberegister auf einfache Weise beibehalten bzw. zugeordnet werden, beispielsweise über den jeweiligen Zeitstempel und/oder Zeitablauf im Schieberegister.

Eine physische Markierung der Behälter selbst ist daher entbehrlich.

Die Behälterverfolgung und Datenzuordnung ist bei einem Transport ohne eine die jeweilige Transportposition im Behälterstrom festlegende bzw. erhaltende Zwangsführung, die beispielsweise in Sternklammern oder Ofenklammern gegeben ist, durch Zählfunktionen, Zeitmessungen und/oder bildgebende Überwachung möglich. Bei einem Lufttransport kann man beispielsweise nach jedem Leerfahren eine Zählfunktion nutzen. Entsprechend kann man nicht auf Transportpositionen bezogen arbeitende Ausleitweichen überwachen.

Bei zwangsgeführter Handhabung der Behälter beispielsweise in einem Maschinenblock kann jedem Behälter, bzw. jeder zugehörigen Schieberegisterposition, in einer Datenbank zugeordnet werden, welches Behandlungsaggregat, welche Behandlungsstation oder welche Transportklammer (eines Transportsterns) einen bestimmten Behälter weiterverarbeitet bzw. transportiert hat. Entsprechende Informationen, wie Online-Messergebnisse (z.B. Wanddicken, Füllhöhenlevel, usw.) aber auch Fehlerinformationen, wie Qualitätsausschleusung (z.B. Flaschenplatzer, Etikettenschiefsitz, usw.) können jeweils dem einzelnen Behälter bzw. der zugehörigen Schieberegister-Position zugeordnet werden.

Bei einer Zwangsführung bzw. bei Blockanwendungen ist eine 1:1-Zuordnung einzelner Behälter und Transportpositionen (bezüglich des Produktstroms) zueinander durchweg mittels Schieberegister möglich. Alle zugehörigen Prozesseinheiten mit mehreren (umlaufenden) Behandlungsstationen benötigen hierzu Information über ihre aktuelle (Dreh-)Position. Diese kann z.B. vom jeweiligen Antrieb, wie einem Schrittmotor, bereitgestellt werden oder aus dem Rundentakt z.B. mittels eines Näherungsinitiators an jeder Behandlungsstation abgeleitet werden. Mögliche Teilnehmer an einem Überwachungssystem basierend auf Schieberegistern sind z.B. alle Prozesseinheiten, die über mehrere Behandlungsstationen verfügen, wie Blasmaschine, Rundlaufrinser, Preform-Ofenkette, Preform-Bestrahlungsstern, Orientierungsstern(e) und ggf. Übergabestern(e) und/oder Etikettiermaschine(n).

Ohne Zwangsführung der Behälter könnten z.B. bei Lufttransportanwendungen, die nach dem Prinzip First-In-First-Out arbeiten, prinzipiell ebenso Schieberegister-Positionen verwendet werden. Da dabei aber eine definierte 1:1-Zuordnung (siehe oben) nicht durchweg gegeben sein muss, z.B. infolge einer Qualitätsausschleusung, können stattdessen oder ergänzend Zeitversätze des Behältertransports zur Identifikation von Behältern und zur Zuordnung der beschriebenen Datensätze verwendet werden.

Beispielsweise bleiben Zeitversätze zwischen einzelnen Behältern in Produktionsphasen, bei denen alle involvierten Prozesseinheiten auf Linienleistung produzieren, nahezu identisch. Dies kann z.B. ausreichend genau sein, um Fehler im Füller, wie "platzende Flaschen", auf Grund ungenügender Behälterqualität durch eine Korrekturschleife zur jeweiligen Blasmaschine zu beheben. Ähnlich könnten Fehlerbilder an Verschließern, Etikettierern, Shrink-Packern, Massentransportmittel oder dergleichen bestimmten Ursachen und/oder Maschinen-Einstellparametern zugeordnet werden.

Ergänzend wäre auch eine Zuordnung über eine physische Behältermarkierung möglich. Markierungen könnten z.B. gezielt am jeweils ersten Behälter nach einer Produktionslücke oder nach Qualitätsausschleusungen an der jeweils nachfolgenden Prozesseinheit angebracht werden, z.B. durch Laserbeschriftung, Direktdruck, UV-Stift usw. Sind keine weiteren Ausleitfunktionen in Transportabschnitten ohne Zwangsführung bzw. Schieberegisterzuordnung vorhanden, kann auf diese Weise auch eine 1:1-Zuordnung (wieder)hergestellt werden.

Besonders vorteilhaft für einen Übergang zwischen zwangsgeführtem Behältertransport, wie z.B. in einer Sternklammer, Füllventil, Drehteller, Blasform, etc., und einem nicht zwangsführten Behältertransport ohne First-In-First-Out, wie z.B. an Überschüben, bei einem Massenstrom und in Pufferspeichern, ist eine dortige bildgebende Behälternachverfolgung durchgehend ab dem bzw. bis zum jeweiligen Übergang vom/zum zwangsgeführten Behältertransport.

Eine solche bildgebende Transportnachverfolgung der Behälter ist mit wenigstens einer Kamera möglich, indem auf prinzipiell bekannte Weise jeder im Abbildungsbereich (Field of View) vorhandene Behälter mittels Bildverarbeitung elektronisch markiert wird, so dass jeder Behälter eindeutig im Massenstrom identifiziert und nachverfolgt werden kann. Hierfür können Behälter und ihre elektronische Markierung zwischen Abbildungsbereichen mehrerer Kameras auf bekannte Weise übergeben werden.

Für eine nachverfolgbare Übergabe der Behälter von nicht zwangsgeführtem Behältertransport zu zwangsgeführtem Behältertransport ist ein Überlappungsbereich vorteilhaft, in dem die Behälter bereits zwangsgeführt sind, dabei aber noch mittels Kameratracking verfolgt werden, um die Datensätze der Behälter auf dieser Grundlage vom Kameratracking an ein Maschinenregister zu übergeben. Ein solcher Überlappungsbereich weist vorzugsweise eine Länge (in Transportrichtung) auf, die dem Durchmesser der zu verarbeitenden Behälter bis hin zum Zehnfachen davon entspricht, beispielsweise eine Länge von 0,05 bis 1 m. Die derart gewonnene Identifikation der Behälter und zugehörige Prozessdaten können dann z.B. für nicht ausreichend einsehbare Transportabschnitte von Rundläufermaschinen an ein zugehöriges Maschinenschieberegister übergeben werden.

Zudem existiert die Möglichkeit von Kameratracking zu einem First-In-First-Out-Bereich und zurück, beispielsweise falls ein Übergang, z.B. eine Leiter, über den Transporteur führt.

Dies erfolgt z.B. an einer Einlaufschnecke oder an einem Einlauf-Sägezahnstern, ist aber prinzipiell auch an einem Transportriemen, einem Einlaufband oder dergleichen möglich. Eine positionsgenaue Synchronisierung ist z.B. über eine Trigger-Lichtschranke möglich, kann aber auch direkt vom bildgebenden Nachverfolgungssystem ins jeweilige Maschinenschieberegister (Einlaufschnecke oder Einlauf-Sägezahnstern) geschrieben und dort weiterverarbeitet werden.

Die während des Behältertransports in der Produktionslinie ausgeführten Verfahrensschritte bzw. Behälterbehandlungen werden von der jeweiligen Prozesseinheit (Behälterbehandlungsmaschine) als prozess- und/oder behälterspezifischen Produktionsdaten erfasst und als ein den jeweiligen Behälter entlang der Produktionslinie begleitender Datensatz gespeichert, der folglich mit jedem Produktionsprozess anwächst, dabei aber stets dem einzelnen Behälter zugeordnet bleibt, z.B. auf Grundlage der jeweiligen Schieberegisterpositionen und/oder der bildgebenden Behälternachverfolgung.

Die Produktionsdaten können gemessene Istwerte, Sollwerte, Auswertungsergebnisse einzelner Behandlungen sein, aber auch Zustandsdaten und/oder Identifikationsdaten von Füllorganen, Verschließorganen, Reaktorkammern, Kavitäten oder dergleichen. Die Produktionsdaten können auch Inspektionsergebnisse, wie z.B. festgestellte Behälterdefekte, und/oder Steuerungskriterien, z.B. zur nachfolgenden Ausleitung einzelner Behälter, beinhalten.

Das beschriebene Überwachungssystem ist insbesondere dazu ausgebildet, Behälter und zugehörige Datensätze von einem zwangsgeführten Transport mit zugehöriger Datenverwaltung in Schieberegistern (Maschinentracking) an einen nicht zwangsgeführten Transport ohne First-In-First-Out (bildgebende Behälternachverfolgung im Massenstrom) zu übergeben und umgekehrt.

Diese Datenübergabe ist auch deshalb vorteilhaft, da eine ausschließlich bildgebende Behälternachverfolgung schwierig oder gar nicht umzusetzen ist, falls Behälter unzureichend einsehbare Transportabschnitte durchlaufen und/oder sich ihr Aussehen infolge der Herstellung oder Behandlung verändert. In diesen Bereichen ermöglichen die Zwangsführung, also die festgelegte Transportposition im Produktstrom, und die Datenverwaltung in Schieberegistern eine eindeutige Identifikation der Behälter und Zuordnung der Datensätze auf nicht-optischem Wege und erleichtern zudem das Einlernen der bildgebenden Behälternachverfolgung nach äußerlicher Veränderung der Behälter, also bei entsprechend veränderter Bildinformation.

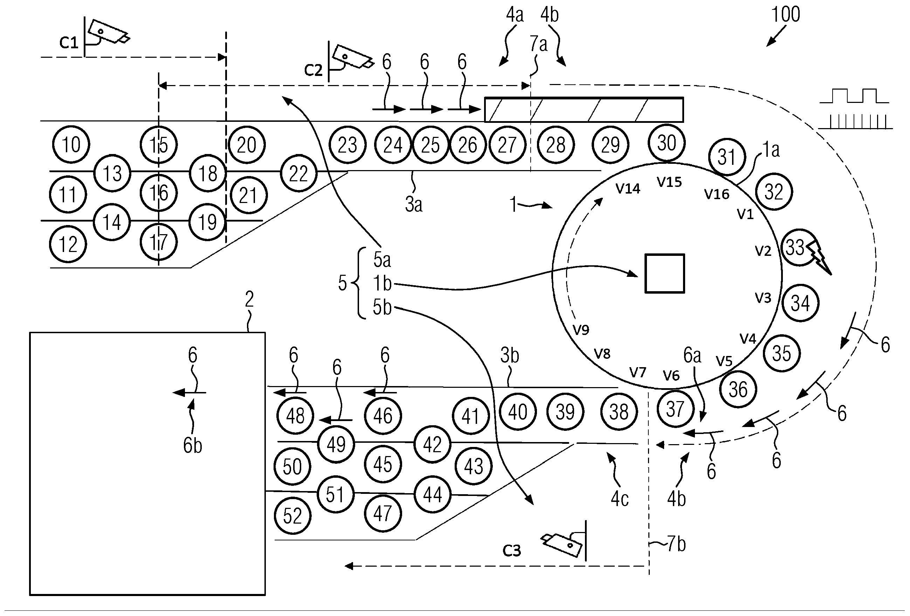

Eine bevorzugte Ausführungsform der Erfindung ist in der einzigen Figur beispielhaft dargestellt. Diese zeigt eine schematische Draufsicht auf eine Produktionslinie.

Demnach umfasst die Produktionslinie 100 wenigstens eine erste Prozesseinheit 1, bei der es sich hier z.B. um einen Füller zur Abfüllung flüssiger Produkte in Behälter 10-52 handelt, und wenigstens eine zweite Prozesseinheit 2, bei der es sich hier z.B. um einen Packer handelt.

Unmittelbar stromaufwärts der ersten Prozesseinheit 1 sowie zwischen dieser und der zweiten Prozesseinheit 2 sind Transportmittel 3a, 3b zum nicht zwangsführten Transport der Behälter 10-52 in Form eines ungeordneten Massenstroms (ohne First-In-First-Out) angeordnet.

Die erste Prozesseinheit 1 umfasst ferner ein Transportmittel 1a zum zwangsgeführten Transport der Behälter 10-52, hier beispielhaft ein Behälterkarussell mit daran umlaufenden und je einen Behälter 10-52 aufnehmenden Stationen V1-V16 (Füllventile).

Entsprechend bilden die Transportmittel 3a, 3b einen ersten Transportabschnitt 4a und einen dritten Transportabschnitt 4c zum jeweils nicht zwangsgeführten Transport der Behälter 10-52 und das Transportmittel 1a einen dazwischenliegenden zweiten Transportabschnitt 4b zum zwangsgeführten Transport der Behälter 10-52 aus.

Die Produktionslinie 100 umfasst ferner ein Überwachungssystem 5, das dazu eingerichtet ist, den einzelnen Behältern 10-52 individuell begleitend Datensätze 6 (nur einige davon schematisch durch Pfeile angedeutet) betreffend einen in den Prozesseinheiten 1, 2 ausgeführten Produktionsablauf zuzuordnen, der hier einen ungeordneten Antransport leerer Behälter, das Befüllen (und nicht dargestellte Verschließen) der Behälter, einen ungeordneten Weitertransport der gefüllten Behälter zum Packer und das Verpacken der Behälter 10-52 umfasst.

Die einzelnen Datensätze 6 der Behälter 10-52 werden beim Durchlaufen der Produktionsprozesse, hier beim Füllen (und Verschließen) und Verpacken, jeweils mit prozess- und/oder behälterspezifischen Produktionsdaten 6a bzw. 6b angereichert.

Das Überwachungssystem 5 umfasst zu diesem Zweck ein dem ersten Transportabschnitt 4a zugeordnetes erstes Nachverfolgungssystem 5a zur bildgebenden Transportnachverfolgung der Behälter 10-52 im Massenstrom mittels Kameras C1 und C2, ein dem zweiten Transportabschnitt 4b und somit der ersten Prozesseinheit 1 zugeordnetes (Maschinen-)Schieberegister 1b und ein dem dritten Transportabschnitt 4c zugeordnetes zweites Nachverfolgungssystem 5b zur bildgebenden Transportnachverfolgung der Behälter 10-52 im Massenstrom mittels einer Kamera C3. Die Kameras C1-C3 können z.B. telezentrisch oberhalb der zugeordneten Transportmittel 3a, 3b angeordnet sein.

Mittels der Nachverfolgungssysteme 5a, 5b und des Schieberegisters 1b bleiben die Datensätze 6 während des Produktionsablaufs durchgehend den jeweiligen Behältern 10-52 zugeordnet und werden dabei im Bereich der Prozesseinheiten 1, 2 jeweils mit den dort erzeugten Produktionsdaten 6a bzw. 6b angereichert. Entsprechend geben die Datensätze 6 am Ende des Produktionsablaufs jeweils eine individuelle Produktionshistorie der Behälter 10-52 wieder und werden für eine spätere Auswertung / Produktnachverfolgung vorzugsweise gespeichert, was auf prinzipiell bekannte Weise möglich ist und daher hier nicht weiter beschrieben wird.

Im Beispiel werden alle Behälter 10-52 mittels des ersten Nachverfolgungssystems 5a identifiziert und entsprechend elektronisch gekennzeichnet, hier mit den Nummern 10-52 und z.B. mit aktueller Positionsinformation des jeweiligen Behälters 10-52 in wenigstens einem Kamerabild sowie mit Zusatzinformationen wie Sorte und individuellem 2-D Code, der beispielsweise bei der Herstellung (in einer nicht dargestellten Blasmaschine) vergeben wird.

Erreichen die Behälter 10-52 einen ersten Übergabepunkt 7a zwischen dem ersten und zweiten Transportabschnitt 4a, 4b, werden die zugehörigen Datensätze 6 (sofern bereits vorhanden) vom ersten Nachverfolgungssystem 5a an das Schieberegister 1b übergeben. Die Datensätze 6 werden dort im Sinne eines virtuellen Informationscontainers bzw. Datenrucksacks mittels Drehgeber positionssynchron durch das Schieberegister 1b der ersten Prozesseinheit 1 geführt. Dabei werden die Datensätze 6 mit Produktionsdaten 6a angereichert, die z.B. die jeweils verwendete Station V1-V16 (Füllventil), den verwendeten Verschließerkopf, das eingefülltes Produkt und/oder die Abfülltemperatur betreffen. Ebenso können die Produktionsdaten 6a Störzustände oder dergleichen angeben. Im Beispiel wird an der Station V2 ein zerstörter Behälter 33 (z.B. Flaschenbruch) festgestellt. Diese Information wird in den Datensatz 6 des Behälters 33 (des Behälters mit der zuvor vergebenen Identifikationsnummer 33) übernommen. Auf dieser Grundlage wird der Behälter 33 z.B. vor Erreichen des zweiten Nachverfolgungssystems 5b ausgeleitet. Der zugehörige, entsprechend angereicherte Datensatz 6 kann dann z.B. in ein übergeordnetes Steuerungssystem übertragen und gespeichert werden, wird also an einem zweiten Übergabepunkt 7b zum zweiten Nachverfolgungssystem 5b nicht mehr an dieses weitergegeben.

Die übrigen Behälter 10-32 und 34-52 passieren den zweiten Übergabepunkt 7b, wobei deren mit den Produktionsdaten 6a angereicherte Datensätze 6 z.B. mit Übernahmekoordinaten für das zweiten Nachverfolgungssystem 5b in dieses unter Beibehaltung der Behälteridentifikation übertragen werden.

In der zweiten Prozesseinheit 2 können die Datensätze 6 der (hier verbliebenen) Behälter 10-32 und 34-52 mit den dort erzeugten Produktionsdaten 6b weiter angereichert und somit für den hier beispielhaft dargestellten Prozessablauf bzw. Prozesszyklus vervollständigt und abgespeichert werden, z.B. zur Verwendung in einem übergeordneten Steuerungssystem (nicht dargestellt).

## Patentansprüche

1. Verfahren zur Kontrolle eines Produktionsablaufs mit wenigstens zwei seriell geschalteten Produktionsprozessen zur Herstellung und/oder Verarbeitung von Behältern (10-52) in einer Produktionslinie (100), die eine Abfüllung flüssiger Produkte umfasst, dieser vorgeschaltet oder dieser nachgeschaltet ist, wobei man den Behältern Datensätze (6) über den Produktionsablauf hinweg individuell zuordnet und beim Durchlaufen der Produktionsprozesse mit prozess- und/oder behälterspezifischen Produktionsdaten (6a, 6b) anreichert.

2. Verfahren nach Anspruch 1, wobei man die Datensätze (6) den Behältern (10-52) im Bereich wenigstens eines Transportabschnitts (4b) mit Zwangsführung der Behälter in wenigstens einem Schieberegister (1b) individuell zuordnet und insbesondere mit den Produktionsdaten (6a, 6b) des jeweils so durchlaufenen Produktionsprozesses anreichert.

3. Verfahren nach Anspruch 2, wobei die Behälter (10-52) derart zwangsgeführt eine Einhausung durchlaufen und/oder hinsichtlich ihres Erscheinungsbilds verändert werden und/oder in umlaufenden Stationen (V1-V16) behandelt und/oder von umlaufenden Halterungen transportiert werden.

4. Verfahren nach einem der vorigen Ansprüche, wobei die Behälter (10-52) in den Produktionsprozessen verändert werden: hinsichtlich ihrer Formgebung, insbesondere durch Umwandlung von Preforms zu Produktbehältern für flüssige Füllgüter und/oder hinsichtlich ihres Inhalts, insbesondere durch Befüllen mit einem flüssigen Füllgut, und/oder hinsichtlich ihrer Ausstattung, insbesondere durch Etikettieren und/oder Verschließen.

5. Verfahren nach einem der vorigen Ansprüche, wobei man die Datensätze (6) den Behältern (10-52) im Bereich von Transportabschnitten (4a, 4c) ohne Zwangsführung, die nicht nach dem Prinzip First-In-First-Out arbeiten, mittels bildgebender Transportnachverfolgung der Behälter individuell zuordnet und insbesondere mit den Produktionsdaten (6a, 6b) des jeweils so durchlaufenen Produktionsprozesses anreichert.

6. Verfahren nach wenigstens einem der vorigen Ansprüche, wobei man die Datensätze (6) den Behältern (10-52) im Bereich von Transportabschnitten ohne Zwangsführung, die nach dem Prinzip First-In-First-Out arbeiten, mittels Laufzeitüberwachung bei jeweils unmittelbar stromaufwärts konstantem Produktionsausstoß individuell zuordnet und insbesondere mit den Produktionsdaten (6a, 6b) des jeweils so durchlaufenen Produktionsprozesses anreichert.

7. Verfahren nach wenigstens einem der vorigen Ansprüche, wobei die Datensätze (6) die Behälter (10-52) nach jeweiliger Anreicherung mit den prozess- und/oder behälterspezifischen Produktionsdaten (6a, 6b) auf elektronischem Wege begleiten, dabei insbesondere zwischen den Transportabschnitten (4a-4c) mit und ohne Zwangsführung übergeben werden, und jeweils nach Durchlaufen der Prozesseinheiten (1, 2) abgespeichert werden.

8. Verfahren nach wenigstens einem der vorigen Ansprüche, wobei die prozessspezifischen Produktionsdaten (6a, 6b) wenigstens einen im jeweiligen Produktionsprozess ermittelten Istwert eines zugehörigen Behandlungsparameters und die behälterspezifischen Produktionsdaten wenigstens eine unmittelbar vor, nach oder während des jeweiligen Produktionsprozesses ermittelte Behältereigenschaft wiedergeben.

9. Produktionslinie (100), welche einen Füller zur Abfüllung flüssiger Produkte in Behälter (10-52) umfasst, diesem vorgeschaltet oder diesem nachgeschaltet ist, mit wenigstens zwei durch wenigstens ein Transportmittel (3b) seriell miteinander verbundenen Prozesseinheiten (1, 2) zur Herstellung und/oder Verarbeitung der Behälter, und mit einem Überwachungssystem (5), das dazu eingerichtet ist, den Behältern Datensätze (6) über einen in den Prozesseinheiten ausgeführten Produktionsablauf individuell zuzuordnen und beim Durchlaufen der Produktionsprozesse mit prozess- und/oder behälterspezifischen Produktionsdaten (6a, 6b) anzureichern, insbesondere gemäß dem Verfahren nach wenigstens einem der vorigen Ansprüche.

10. Produktionslinie nach Anspruch 9, wobei das Überwachungssystem (5) wenigstens ein Schieberegister (1b) umfasst, welches einer Prozesseinheit (1) und/oder einem Transportmittel zugeordnet ist, in der/dem die Behälter (10-52) zwangsgeführt werden, und wobei das Überwachungssystem eingerichtet ist, die Datensätze (6) den Behältern mittels des Schieberegisters individuell zuzuordnen und auf dieser Grundlage mit den Produktionsdaten (6a, 6b) der/des so durchlaufenen Prozesseinheit und/oder Transportmittels anzureichern.

11. Produktionslinie nach Anspruch 9 oder 10, wobei das Überwachungssystem (5) wenigstens ein Nachverfolgungssystem (5a, 5b) zur bildgebenden Transportnachverfolgung der Behälter (10-52) umfasst, welches einer Prozesseinheit und/oder einem Transportmittel (3a, 3b) zugeordnet ist, in der/dem die Behälter nicht zwangsgeführt werden, insbesondere in Form ungeordneten Massentransports, und wobei das Überwachungssystem eingerichtet ist, die Datensätze (6) den Behältern mittels des Nachverfolgungssystems individuell zuzuordnen und insbesondere auf dieser Grundlage mit Produktionsdaten der/des so durchlaufenen Prozesseinheit und/oder Transportmittels anzureichern.

12. Produktionslinie nach einem der Ansprüche 9 bis 11, wobei das Überwachungssystem (5) einen Überlappungsbereich an einem Übergang von nicht zwangsgeführtem zu zwangsgeführtem Behältertransport umfasst, in dem die Behälter (10-52) bereits zwangsgeführt sind, dabei aber noch bildgebend nachverfolgt werden, um die Datensätze (6) der Behälter auf dieser Grundlage von einem Nachverfolgungssystem (5a, 5b) zur bildgebenden Transportnachverfolgung an ein Schieberegister (1b) zu übergeben.

13. Produktionslinie nach Anspruch 12, wobei der Überlappungsbereich eine relative Länge aufweist, die wenigstens dem Durchmesser der zu verarbeitenden Behälter (10-52) bis hin zum Zehnfachen davon entspricht, und/oder eine absolute Länge von 0,05 bis 1 m aufweist.

14. Produktionslinie nach einem der Ansprüche 9 bis 13, wobei das Überwachungssystem (5) wenigstens ein Laufzeitkontrollsystem zur Laufzeitmessung einzelner Behälter (10-52) umfasst, welches einer Prozesseinheit und/oder einem Transportmittel zugeordnet ist, in der/dem die Behälter nicht zwangsgeführt werden, insbesondere in Form eines jeweils einbahnigen Lufttransports, und wobei das Überwachungssystem eingerichtet ist, die Datensätze (6) den Behältern mittels des Laufzeitkontrollsystems bei konstantem Produktionsausstoß unmittelbar stromaufwärts individuell zuzuordnen und insbesondere auf dieser Grundlage mit den Produktionsdaten der/des so durchlaufenen Prozesseinheit und/oder Transportmittels anzureichern.

15. Produktionslinie nach einem der Ansprüche 9 bis 14, wobei das Überwachungssystem (5) derart eingerichtet ist, dass die Datensätze (6) die Behälter (10-52) nach jeweiliger Anreicherung mit den prozess- und/oder behälterspezifischen Produktionsdaten (6a, 6b) auf elektronischem Wege begleiten, dabei insbesondere zwischen wenigstens dem Schieberegister (1b), dem Nachverfolgungssystem (5a, 5b) und/oder dem Laufzeitkontrollsystem übergeben werden, und ferner nach Durchlaufen der Prozesseinheiten (1, 2) mit deren Produktionsdaten (6a, 6b) abgespeichert werden.
